# EUROPEAN PATENT SPECIFICATION

(11) **EP 3 070 123 B1**
(45) Date of publication and mention of the grant of the patent: **01.08.2018**
(21) Application number: 14861760.8
(22) Date of filing: 11.11.2014
(51) Int. Cl.: C08L 51/06, C08L 23/10, C08L 53/02, B32B 27/00, B32B 27/32, C08F 210/02, C08F 255/02

(54) **THERMOPLASTIC ELASTOMER RESIN COMPOSITION**
THERMOPLASTISCHE ELASTOMERHARZZUSAMMENSETZUNG
COMPOSITION DE RÉSINE ÉLASTOMÈRE THERMOPLASTIQUE

(30) Priority: 12.11.2013 JP 2013234376
(43) Date of publication of application: 21.09.2016
(73) Proprietor: Denka Company Limited, Chuo-ku Tokyo 103-8338 (JP)
(72) Inventor: KUMAGAI Yushi, Ichihara-shi Chiba 290-8588 (JP); HASEGAWA Masaru, Ichihara-shi Chiba 290-8588 (JP); NOGUCHI Tetsuo, Ichihara-shi Chiba 290-8588 (JP)
(74) Representative: Gulde & Partner
(86) International application number: PCT/JP2014/079891
(87) International publication number: WO 2015/072466

(56) References cited:
- WO-A1-00/37517
- JP-A- H1 148 409
- JP-A- 2009 102 515
- JP-A- 2009 120 792
- JP-A- 2009 167 387
- JP-B2- 4 212 716
- JP-B2- 4 363 604
- US-A1- 2002 037 965
- US-A1- 2002 151 649
- US-A1- 2011 281 994

## Description

### TECHNICAL FIELD

The present invention relates to a thermoplastic elastomer resin composition that excels in tensile breaking strength, softness, oil resistance and scratch resistance, and that has good heat fusion ability with respect to polyolefin resins.

### BACKGROUND ART

In automotive components, household electrical appliance components, medical components and miscellaneous goods which have conventionally been dominated by the use of vulcanized rubber, thermoplastic elastomers which excel in productivity are coming into more frequent use. Examples thereof include soft vinyl chloride, olefinic elastomers and styrenic elastomers.

Although soft vinyl chloride is an elastomer having exceptional scratch resistance, it presents problems of recycling and environmental hormones. While examples of non-vinyl chloride elastomers include olefinic thermoplastic elastomers consisting, for example, of ethylene-propylene copolymers and polypropylenes, they have the drawback of having inferior scratch resistance of the surface due to fabrics, fingernails or the like as compared to soft vinyl chloride. As means for improving the scratch resistance, there are methods of adding higher fatty acid amides or silicone oils to thermoplastic elastomers, but these methods can result in defects in the appearance due to bleeding and have not been able to provide sufficient scratch resistance.

There have been several proposals of styrenic thermoplastic elastomers using hydrogenated aromatic vinyl-conjugated diene block copolymers (hereinafter abbreviated to hydrogenated block copolymers). For example, Patent Document 1 and Patent Document 2 disclose compositions in which a polypropylene resin is blended into a hydrogenate block copolymer. These compositions have better scratch resistance than olefinic thermoplastic elastomers, but are inferior to soft vinyl chlorides, so further improvements in scratch resistance have been sought. Additionally, styrenic thermoplastic elastomer resin compositions have problems of oil resistance originating in the hydrogenated block copolymers and improvements are desired.

Patent Document 3, Patent Document 4 and Patent Document 6 propose a so-called cross-copolymer production method which is a method of copolymerizing a small amount of divinylbenzene with a styrene-ethylene copolymer, and introducing a polystyrene (cross-chain) via a vinyl group in the divinylbenzene unit, and a cross-copolymer obtained by this method. The cross-copolymer obtained by this method is a branched block copolymer having styrene-ethylene copolymer chains as soft segments and polystyrene as hard segments, which has improved heat resistance to near the glass transition temperature (about 100 °C) of polystyrene, while possessing the scratch resistance of the styrene-ethylene copolymer. Patent Document 5 proposes a cross-copolymer with a low degree of crystallization, and excelling in softness, transparency and compatibility, and a resin composition thereof. The document further proposes a resin composition containing a cross-copolymer and an isotactic polypropylene as a resin composition that exhibits good heat resistance and dynamic properties, and exceptional oil resistance. However, it is not useful for some applications due to its low breaking strength, so improvements in breaking strength are sought. Patent Document 7 discloses a thermoplastic elastomer resin composition comprising: 20-50 wt% of a hydrogenated product of styrene-conjugated diene copolymer rubber, 5-25 wt% of an ethylene-octene copolymer rubber, 5-20 wt% of a crystalline polyolefin resin, and 20-70 wt% of a softener for hydrocarbon rubber.

### PRIOR ART DOCUMENTS

### PATENT DOCUMENTS

Patent Document 1: JP 4212716 B
Patent Document 2: JP 4363604 B
Patent Document 3: WO 00/037517
Patent Document 4: JP 2009-102515 A
Patent Document 5: WO 2007/139116
Patent Document 6: JP 2009-120792 A
Patent Document 7: JP H11 048409 A

### SUMMARY OF INVENTION

### PROBLEMS TO BE SOLVED BY THE INVENTION

The present invention provides a thermoplastic elastomer resin composition that excels in tensile breaking strength, softness, oil resistance and scratch resistance, and that has good heat fusion ability with respect to polyolefin resins.

### MEANS FOR SOLVING THE PROBLEMS

The present invention can be summarized as follows.
(1) A thermoplastic elastomer resin composition consisting of: 15 to 89 mass% of a cross-copolymer having a polymer consisting of aromatic vinyl monomer units as a cross-chain structure on an aromatic vinyl-olefin-aromatic polyene copolymer main chain consisting of 9.99 to 29.99 mol% of aromatic vinyl monomer units, 70 to 90 mol% of olefin monomer units and 0.01 to 0.5 mol% of aromatic polyene monomer units; 1 to 55 mass% of a hydrogenated block copolymer; and 10 to 60 mass% of a polypropylene resin.
(2) The thermoplastic elastomer resin composition according to claim 1, wherein the aromatic vinyl-olefin-aromatic polyene copolymer consists of 13.97 to 25.97 mol% of aromatic vinyl monomer units, 74 to 86 mol% of olefin monomer units and 0.03 to 0.3 mol% of aromatic polyene monomer units.
(3) The thermoplastic elastomer resin composition according to (1) or (2), wherein the cross-copolymer has 5 to 50 mass% of the polymer consisting of aromatic vinyl monomer units as the cross-chain structure on 50 to 95 mass% of the aromatic vinyl-olefin-aromatic polyene copolymer main chain.
(4) The thermoplastic elastomer resin composition according to any one of (1) to (3), wherein the olefin monomer units in the cross-copolymer are ethylene units.
(5) The thermoplastic elastomer resin composition according to any one of (1) to (4), wherein the aromatic vinyl monomer units in the cross-copolymer are styrene units.
(6) The thermoplastic elastomer resin composition according to any one of claims (1) to (5), consisting of: 20 to 80 mass% of the cross-copolymer; 5 to 35 mass% of the hydrogenated block copolymer; and 15 to 45 mass% of the polypropylene resin.
(7) A composite molded article comprising a core material consisting of a polyolefinic resin; and a surface layer material consisting of the thermoplastic elastomer resin composition according to any one of (1) to (6), wherein the surface layer material is double-molded onto the surface of the core material.

### EFFECTS OF THE INVENTION

The thermoplastic elastomer resin composition of the present invention excels in tensile breaking strength, softness, oil resistance and scratch resistance, has good heat fusion ability with respect to polyolefin resins, and is effective for use in automotive components, household electrical appliance components, medical components and miscellaneous goods.

### [Explanation of Terminology]

In the present specification and claims, "A to B" refers to the range from A to B inclusive.

### MODES FOR CARRYING OUT THE INVENTION

Herebelow, modes for carrying out the present invention will be explained.

### <Cross-copolymer>

The cross-copolymer has a structure (cross-chain structure) having an aromatic vinyl-olefin-aromatic polyene copolymer consisting of aromatic vinyl monomer units, olefin monomer units and aromatic polyene monomer units as a main chain structure, to which polymers consisting of aromatic vinyl monomer units are bound via the aromatic polyene monomer units on the main chain.

Examples of aromatic vinyl monomer units include units derived from styrenic monomers such as styrene and various substituted styrenes, e.g., p-methylstyrene, m-methylstyrene, o-methylstyrene, o-t-butylstyrene, m-t-butylstyrene, p-t-butylstyrene, p-chlorostyrene and o-chlorostyrene. Among these, styrene units, p-methylstyrene units and p-chlorostyrene units are preferred, and styrene units are particularly preferred. These aromatic vinyl monomer units may be of a single type, or may be a combination of two or more types.

Examples of olefin monomer units include units derived from α-olefin monomers and cyclic olefin monomers, such as ethylene and α-olefins having 3 to 20 carbon atoms, e.g., propylene, 1-butene, 1-hexene, 4-methyl-1-pentene, 1-octene, vinylcyclohexane, and cyclic olefins, i.e. cyclopentene, norbornene, etc. Preferably, a mixture of ethylene units, propylene units, 1-butene units, 1-hexene units and 1-octene units is used, and ethylene units are particularly preferred.

Examples of aromatic polyene monomer units include units derived from aromatic polyene monomers which are aromatic polyenes having at least 10 and at most 30 carbon atoms, a plurality of double bonds (vinyl groups) and a single or a plurality of aromatic groups, e.g., ortho-divinylbenzene, para-divinylbenzene, meta-divinylbenzene, 1,4-divinylnaphthalene, 3,4-divinylnaphthalene, 2,6-divinylnaphthalene, 1,2-divinyl-3,4-dimethylbenzene, 1,3-divinyl-4,5,8-tributylnaphthalene etc. Preferably, one or a mixture of two or more of ortho-divinylbenzene units, para-diviylbenzene units and meta-divinylbenzene units are used.

The structural units of the aromatic vinyl-olefin-aromatic polyene copolymer are 9.99 to 29.99 mol% of aromatic vinyl monomer units, 70 to 90 mol% of olefin monomer units, and 0.01 to 0.5 mol% of aromatic polyene monomer units, preferably 13.97 to 25.97 mol% of aromatic vinyl monomer units, 74 to 86 mol% of olefin monomer units and 0.03 to 0.3 mol% of aromatic polyene monomer units.

The aromatic vinyl monomer units are preferably included in an amount of at least 9.99 mol% because this reduces the crystal structure from the olefin chain structure and improves the softness, and an amount of at least 13.97 mol% is particularly preferred. The aromatic vinyl monomer units are preferably included in an amount of at most 29.99 mol% because this lowers the glass transition temperature and improves the softness, impact resistance and cold resistance, and an amount of at most 25.97 mol% is particularly preferred. The olefin monomer units are preferably included in an amount of at least 70 mol% because this lowers the glass transition temperature and improves the softness, impact resistance and cold resistance, and an amount of at least 74 mol% is particularly preferred. The olefin monomer units are preferably included in an amount of at most 90 mol% because the crystal structure from the olefin chain structure is reduced and the softness is improved, and an amount of at most 86 mol% is particularly preferred. The aromatic polyene monomer units are preferably included in an amount of at least 0.01 mol%, because this raises the compatibility with hydrogenated block copolymers and improves the tensile breaking strength, and an amount of at least 0.03 mol% is particularly preferred. Additionally, they are preferably included in an amount of at most 0.5 mol% because this improves the tensile breaking strength and the scratch resistance, and an amount of at most 0.3 mol% is particularly preferred.

While the weight-average molecular weight of the aromatic vinyl-olefin-aromatic polyene copolymer is not particularly restricted, it should preferably be 30,000 to 300,000, more preferably 50,000 to 200,000 in view of the moldability of the thermoplastic elastomer resin composition. The weight-average molecular weight refers to polystyrene-converted values measured by gel permeation chromatography (GPC), the measurements being made under the below-indicated measurement conditions.

| | |
|---|---|
| Equipment: | HLC-8220 (manufactured by Toso) |
| Column: | Shodex GPC KF-404HQ, four in a linear arrangement |
| Temperature: | 40 °C |
| Detection: | differential refractive index |
| Solvent: | tetrahydrofuran |
| Calibration curve: | produced using standard polystyrene (PS) |

The polymer consisting of aromatic vinyl monomer units constituting a cross-chain structure may be a polymer consisting of aromatic vinyl monomer units of one type, or a copolymer consisting of aromatic vinyl monomer units of two or more types. As the type of aromatic vinyl monomer unit, the monomer units may be of the same type as the aromatic vinyl monomer units constituting the above-mentioned main chain.

The weight-average molecular weight of the polymer consisting of aromatic vinyl monomer units constituting the cross-chain structure is not particularly limited, but in view of the moldability, it should preferably be 30,000 to 150,000, more preferably 5,000 to 70,000.

While there are no particular limitations on the ratio between the aromatic vinyl-olefin-aromatic polyene copolymer main chain constituting the cross-copolymer and the polymer cross-chain consisting of aromatic vinyl monomer units, the main chain should preferably be at least 50 mass% because this increases the softness, and the main chain should preferably be at most 95 mass% because this raises the compatibility with the hydrogenated block copolymer and improves the tensile breaking strength.

While the method of producing the cross-copolymer is not particularly limited as long as the desired cross-copolymer is obtained, as one example, it can be produced by a production method in accordance with international publication WO 00/37517 or US 6559234. In other words, the production method may comprise a polymerization step consisting of a coordination polymerization step followed by an anionic polymerization step, the method comprising a coordination polymerization step of polymerizing an aromatic vinyl-olefin-aromatic polyene copolymer using a coordination polymerization catalyst, followed by a step of polymerization using an anionic polymerization initiator in the co-presence of this aromatic vinyl-olefin-aromatic polyene copolymer and aromatic vinyl monomers, to produce a cross-copolymer. While an aromatic vinyl-olefin copolymer may sometimes be produced as a byproduct of the coordination polymerization step, it may be included if occupying no more than 50 mass% of the cross-copolymer, as a range not compromising the effects of the invention. In the subsequent anionic polymerization step, a polymer consisting of aromatic vinyl monomer units may sometimes be produced as a byproduct by not binding to the vinyl groups remaining in the aromatic polyene monomer units of the main chain, but it may be included if occupying no more than 20 mass% of the cross-copolymer, as a range not compromising the effects of the invention.

As the method for recovering the cross-copolymer, any method may be used, such as a method of precipitation by a poor solvent such as methanol, a method of precipitation by evaporation of a solvent by a heating roller or the like (drum dryer method), a method of concentrating the solution with a concentrator followed by removal of the solvent by a vent-type extruder, a method of dispersing the solution in water and thermally removing the solvent by blowing in steam to recover the copolymer (steam stripping method), a crumb forming method or the like.

### <Hydrogenated block copolymer>

A hydrogenated block copolymer refers to a copolymer consisting of aromatic vinyl monomer units and conjugated diene monomer units in which the double bonds have been hydrogenated to make single bonds. Examples include block copolymers wherein atactic polystyrene structures known as styrene-ethylene-butylene-styrene block copolymers (SEBS) and styrene-ethylene-propylene-styrene block copolymers (SEPS) form hard segments, and ethylene-butylene copolymers or ethylene-propylene-isoprene copolymers form soft segments. Examples of block copolymers include triblock, tetrablock, pentablock, multiblock, star-shaped or radial types, and any of these types of block copolymers can be used.

Examples of aromatic vinyl monomer units include units derived from styrenic monomers such as styrene and various substituted styrenes, e.g., p-methylstyrene, m-methylstyrene, o-methylstyrene, o-t-butylstyrene, m-t-butylstyrene, p-t-butylstyrene, p-chlorostyrene and o-chlorostyrene. Among these, styrene units, p-methylstyrene units and p-chlorostyrene units are preferred, and styrene units are particularly preferred. These aromatic vinyl monomer units may be used as a single type, or as a combination of two or more types.

Examples of conjugated diene monomer units include units derived from conjugated diene monomers such as butadiene, isoprene, 1,3-pentadiene and 2,3-dimethyl-1,3-butadiene. Among these, butadiene units and isoprene units are preferable. These conjugated diene monomer units may be used as a single type, or as a combination of two or more types.

While there are no particular limitations on the amount of the aromatic vinyl monomer units constituting the hydrogenated block copolymer, there should be 10 to 45 mass% of the aromatic vinyl monomer units in view of the tensile breaking strength, and 12 to 35 mass% of the aromatic vinyl monomer units is more preferable. Regarding the amount of conjugated diene monomer units in which the double bonds are hydrogenated to make single bonds, they may occupy the entire quantity aside from the aromatic vinyl monomer units, but due to the difficulty of changing all of the double bonds in the conjugated monomer units to single bonds in the hydrogenation step from the viewpoint of productivity, conjugated diene monomer units may be included if no more than 20 mass% in the hydrogenated block copolymer, as the range within which the effects of the invention are not compromised.

While the weight-average molecular weight of the hydrogenated block copolymer is not particularly limited, it should preferably be 50,000 to 350,000 in view of the tensile strength, and more preferably 80,000 to 300,000.

As for the method of obtainment of the hydrogenated block copolymer, it is possible to use commercially available resins, or to use those produced by various publicly known methods for producing hydrogenated block copolymers.

While many methods have been proposed as methods for producing hydrogenated block copolymers, a representative method is the method described, for example, in JP 40-23798 B, wherein a lithium catalyst or a Ziegler catalyst is used to induce block copolymerization of aromatic vinyl monomers and conjugated diene monomers in an inert solvent, followed by hydrogenation in the inert solvent.

### <Polypropylene resin>

Examples of the polypropylene resin used in the present invention include propylene homopolymers such as isotactic homopolypropylene, syndiotactic homopolypropylene and atactic homopolypropylene, and α-olefin-propylene copolymers represented by ethylene-propylene random copolymers, ethylene-propylene block copolymers and ethylene-propylene random block copolymers. These polypropylene resins may be used as a single type, or as a combination of two or more types.

As for the method of obtainment of the polypropylene rein, it is possible to use commercially available resins, or to use those produced by publicly known polymerization methods using various publicly known catalysts for propylene polymerization.

As the method for producing the polypropylene resin, publicly known Ziegler-Natta catalysts, or publicly known complex-type catalysts such as metallocene complexes and non-metallocene complexes, may be used in methods of homopolymerization of propylenes or copolymerization of propylenes with other monomers, by means of publicly known polymerization methods such as slurry polymerization, solution polymerization, bulk polymerization and vapor phase polymerization.

The thermoplastic elastomer resin composition of the present invention is a thermoplastic elastomer resin composition consisting of 15 to 89 mass% of a cross-copolymer, 1 to 55 mass% of a hydrogenated block copolymer and 10 to 60 mass% of a polypropylene resin, preferably 20 to 80 mass% of the cross-copolymer, 5 to 35 mass% of the hydrogenated block copolymer and 15 to 45 mass% of the polypropylene resin.

The amount of the cross-copolymer is preferably at least 15 mass% because this improves the oil resistance and the scratch resistance, and an amount of at least 20 mass% is particularly preferred. The amount of the cross-copolymer is preferably at most 89 mass% because this increases the tensile breaking strength, and the amount is more preferably at most 80 mass%. The amount of the hydrogenated block copolymer is preferably at least 1 mass% because this improves the tensile breaking strength, and an amount of at least 5 mass% is particularly preferred. The amount of the hydrogenated block copolymer is preferably at most 55 mass% because this improves the oil resistance, and an amount of at most 35 mass% is particularly preferred. The amount of the polypropylene resin is preferably at least 10 mass% because this improves the tensile breaking strength, the oil resistance and the heat fusion ability with respect to polyolefin resins, and an amount of at least 15 mass% is particularly preferred. The amount of the polypropylene resin is preferably at most 60 mass% because this improves the softness and scratch resistance, and an amount of at most 45 mass% is particularly preferred.

### <Other components>

The thermoplastic elastomer resin composition of the present invention may contain other resins, plasticizers, heat stabilizing agents, anti-oxidants, light stabilizing agents, UV absorbing agents, crystal nucleating agents, anti-blocking agents, seal improving agents, mold release agents such as stearic acid and silicone oil, lubricants such as polyethylene wax, colorants, pigments, inorganic fillers (alumina, talc, calcium carbonate, mica, wollastonite, clay), foaming agents (organic or inorganic) and flame retardants (hydrate compounds, red phosphorus, ammonium polyphosphate, antimony, silicone) within a range not compromising the purpose of the present invention.

The method for obtaining the thermoplastic elastomer resin composition of the present invention is not particularly limited, and publicly known melt-kneading techniques may be used. Melt-kneading equipment that can be favorably used include screw extruders such as single-screw extruders, meshed co-rotating or meshed counter-rotating twin-screw extruders, and non- or partially meshed twin-screw extruders, Banbury mixers, co-kneaders and mixing rollers.

The composition can be prepared by a publicly known mixing apparatus in accordance with the composition ratios of the respective components. Examples of such mixing equipment include kneading equipment such as Banbury mixers, Laboplast mills, single-screw extruders and twin-screw extruders, among which melt-kneading by extruders is preferred in view of the productivity and good kneadability.

The thermoplastic elastomer resin composition obtained by the present invention may be double-molded with another resin to form a composite molded article. A preferable specific example of a formed composite molded article is a composite molded article wherein the thermoplastic elastomer resin composition according to the present invention is double-molded as a surface layer material onto the surface of a core material consisting of a polyolefin resin. In this composite molded article, the shape of the core material is not particularly limited, and examples include sheets and plates. The surface layer material may be formed on one or more surfaces of the core material, and may be formed so as to surround the outer periphery of the core material. The thermoplastic elastomer resin composition obtained in the present invention excels in tensile breaking strength, softness and oil resistance, and also has good heat fusion ability with respect to polyolefin resins, so this composite molded article having a surface layer material double-molded onto the surface of a core material consisting of a polyolefin resin can be used in automotive interior elements, household electric appliance elements, toys and miscellaneous goods. In particular, it has exceptional scratch resistance, and therefore is favorable for use in skin materials requiring an outer appearance for a product.

### <Polyolefin resin>

Examples of polyolefin resins include polypropylene resins and polyethylene resins. Examples of polyethylene resins include polyethylene, ethylene-α-olefin copolymers, ethylene-vinyl acetate copolymers, ethylene-(meth)acrylic acid copolymers and ethylene-(meth)acrylic acid ester copolymers. Examples of polyethylenes include low-density polyethylenes (branched ethylene polymers), medium-density polyethylenes and high-density polyethylenes (linear ethylene polymers). Examples of ethylene-α-olefin copolymers include ethylene-butene copolymers, ethylene-hexene copolymers, ethylene-heptene copolymers, ethylene-octene copolymers and ethylene-4-methylpentene copolymers.

These olefinic resins may be of a singe type or a mixture of two or more types. Among polyolefin resins, polypropylene resins are particularly preferred.

The method of obtaining the double-molded composite molded article is not particularly limited, and any method that is conventionally known as a molding method for thermoplastic resins can be used. For example, various molding methods such as T-die lamination molding, co-extrusion molding, multi-layer blow molding, injection molding (insert injection molding, double injection molding (die rotation type, core back type), sandwich injection molding, injection press molding) can be used.

### EXAMPLES

Herebelow, the present invention will be explained by providing examples and comparative examples, but these are merely exemplary and do not limit the subject matter of the present invention.

### <Raw material resin>

- Cross-copolymer (I)
- Cross-copolymer (II)
- Cross-copolymer (III)
- Cross-copolymer (IV)
- Cross-copolymer (V)
- Cross-copolymer (VI)
- Cross-copolymer (VII)
- Cross-copolymer (VIII)
- Cross-copolymer (IX)
- Septon 8007L (product of Kuraray) (Styrene-ethylene/butene-styrene block copolymer (SEBS), styrene content 30 mass%, MFR 2.0 g/10 min (230 °C, 2.16 kg))
- Kraton G1650 (product of Kraton Polymer Japan) (Styrene-ethylene/butene-styrene block copolymer (SEBS), styrene content 29 mass%, MFR 0.1 g/10 min (230 °C, 2.16 kg))
- Prime Polypro E-200GP (product of Prime Polymer, homopolymer type polypropylene, MFR 2.0 g/10 min (230 °C, 2.16 kg))
- Prime Polypro J707 (product of Prime Polymer, block type polypropylene, MFR 30.0 g/10 min (230 °C, 2.16 kg))
- Prime Polypro J232WA (product of Prime Polymer, random type polypropylene, MFR 1.5 g/10 min (230 °C, 2.16 kg))

### <Coordination polymerization catalyst>

The following Synthesis Examples 1 to 7 used rac-dimethylmethylene bis(4,5-benzo-1-indenyl)zirconium dichloride (Chemical Formula 1) as the coordination polymerization catalyst.

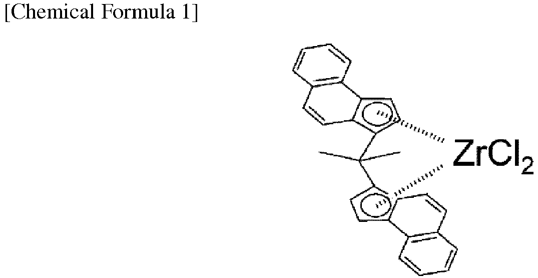

### <Synthesis Example 1>

### Synthesis of Cross-copolymer (I)

### <Coordination Polymerization Step>

Polymerization was performed using an autoclave with a capacity of 50 L, equipped with a stirrer and a heating/cooling jacket.

23.1 kg of cyclohexane, 2.9 kg of styrene and divinylbenzene manufactured by Nippon Steel Chemical (meta- and para- mixture, 73 mmol as divinylbenzene) were loaded and stirred at 220 rpm with an internal temperature of 60 °C. Next, 50 mmol of triisobutyl aluminum and 65 mmol of methyl aluminoxane (produced by Toso FineChem, MMAO-3A/toluene solution) on Al-basis were added, and the gas in the system was immediately substituted with ethylene. After substitution, the internal temperature was raised to 90 °C and ethylene was fed to make the pressure 0.39 MPaG. Thereafter, 50 ml of a toluene solution into which were dissolved 110 µmol of rac-dimethylmethylene bis(4,5-benzo-1-indenyl)zirconium dichloride and 1 mmol of triisobutyl aluminum was added to the autoclave. Polymerization immediately began, and the internal temperature rose to 95 °C. The polymerization was carried out with the internal temperature at 95 °C and by supplementing ethylene to maintain a pressure of 0.39 MPaG. When the consumed amount of ethylene reached 3.0 kg, a small amount (50 mL) of polymerization solution was sampled and mixed into methanol to precipitate the resin, after which the precipitated resin was filtered out and the resulting resin was dried to obtain a sample. The styrene content and divinylbenzene (DVB) content for the coordination polymerization step were measured using ¹H-NMR on the obtained sample. Additionally, the weight-average molecular weight for the coordination polymerization step was determined by gel permeation chromatography (GPC). The measurement results for the styrene content (mol%), DVB content (mol%) and weight-average molecular weight in the coordination polymerization step are shown in Table 1.

### <Anionic polymerization step>

The supply of ethylene to the polymerization tank was stopped, the ethylene was rapidly depressurized and the internal temperature was cooled to 60 °C. After cooling the internal temperature of the autoclave to 60 °C, 220 mmol of n-butyl lithium (hexane solution) were fed into the polymerization tank from a catalyst tank together with nitrogen gas. Anionic polymerization immediately began, and the internal temperature rose from 60 °C to 75 °C at one point. The temperature was maintained at 75 °C for 1 hour and the polymerization was continued. After the polymerization was completed, 100 ml of water was injected to deactivate the n-butyl lithium. The solvent was removed from the polymerization solution by means of a degassing extruder wherein the level of pressure reduction of the degassing portion was set to 50 to 100 mmHg. The target polymer was recovered as 5.2 kg of pellets. The weight-average molecular weight (PS chain Mw) of the cross-chains was determined by GPC on the recovered pellets. The obtained analysis results are shown in Table 1.

### <Synthesis Example 2>

### Synthesis of Cross-copolymer (II)

### <Coordination Polymerization Step>

Polymerization was performed using an autoclave with a capacity of 50 L, equipped with a stirrer and a heating/cooling jacket.

20.8 kg of cyclohexane, 3.6 kg of styrene and divinylbenzene manufactured by Nippon Steel Chemical (meta- and para- mixture, 58 mmol as divinylbenzene) were loaded and stirred at 220 rpm with an internal temperature of 60 °C. Next, 50 mmol of triisobutyl aluminum and 75 mmol of methyl aluminoxane (produced by Toso FineChem, MMAO-3A/toluene solution) on Al-basis were added, and the gas in the system was immediately substituted with ethylene. After substitution, the internal temperature was raised to 90 °C and ethylene was fed to make the pressure 0.45 MPaG. Thereafter, 50 ml of a toluene solution into which were dissolved 110 µmol of rac-dimethylmethylene bis(4,5-benzo-1-indenyl)zirconium dichloride and 1 mmol of triisobutyl aluminum was added to the autoclave. Polymerization immediately began, and the internal temperature rose to 95 °C. The polymerization was carried out with the internal temperature at 95 °C and by supplementing ethylene to maintain a pressure of 0.45 MPaG. When the consumed amount of ethylene reached 3.1 kg, a small amount (50 mL) of polymerization solution was sampled and mixed into methanol to precipitate the resin, after which the precipitated resin was filtered out and the resulting resin was dried to obtain a sample. The styrene content (mol%) and divinylbenzene (DVB) content (mol%) for the coordination polymerization step were measured using ¹H-NMR on the obtained sample. Additionally, the weight-average molecular weight for the coordination polymerization step was determined by gel permeation chromatography (GPC). The measurement results for the styrene content (mol%), DVB content (mol%) and weight-average molecular weight in the coordination polymerization step are shown in Table 1.

### <Anionic polymerization step>

The supply of ethylene to the polymerization tank was stopped, the ethylene was rapidly depressurized and the internal temperature was cooled to 60 °C. After cooling the internal temperature of the autoclave to 60 °C, 250 mmol of n-butyl lithium (hexane solution) were fed into the polymerization tank from a catalyst tank together with nitrogen gas. Anionic polymerization immediately began, and the internal temperature rose from 60 °C to 75 °C at one point. The temperature was maintained at 75 °C for 1 hour and the polymerization was continued. After the polymerization was completed, 100 ml of water was injected to deactivate the n-butyl lithium. The solvent was removed from the polymerization solution by means of a degassing extruder wherein the level of pressure reduction of the degassing portion was set to 50 to 100 mmHg. The target polymer was recovered as 5.9 kg of pellets. The weight-average molecular weight (PS chain Mw) of the cross-chains was determined by GPC on the recovered pellets. The obtained analysis results are shown in Table 1.

### <Synthesis Example 3>

### Synthesis of Cross-copolymer (III)

### <Coordination Polymerization Step>

Polymerization was performed using an autoclave with a capacity of 50 L, equipped with a stirrer and a heating/cooling jacket.

17.4 kg of cyclohexane, 5.3 kg of styrene and divinylbenzene manufactured by Nippon Steel Chemical (meta- and para- mixture, 102 mmol as divinylbenzene) were loaded and stirred at 220 rpm with an internal temperature of 60 °C. Next, 50 mmol of triisobutyl aluminum and 75 mmol of methyl aluminoxane (produced by Toso FineChem, MMAO-3A/toluene solution) on Al-basis were added, and the gas in the system was immediately substituted with ethylene. After substitution, the internal temperature was raised to 90 °C and ethylene was fed to make the pressure 0.45 MPaG. Thereafter, 50 ml of a toluene solution into which were dissolved 100 µmol of rac-dimethylmethylene bis(4,5-benzo-1-indenyl)zirconium dichloride and 1 mmol of triisobutyl aluminum was added to the autoclave. Polymerization immediately began, and the internal temperature rose to 95 °C. The polymerization was carried out with the internal temperature at 95 °C and by supplementing ethylene to maintain a pressure of 0.45 MPaG. When the consumed amount of ethylene reached 3.3 kg, a small amount (50 mL) of polymerization solution was sampled and mixed into methanol to precipitate the resin, after which the precipitated resin was filtered out and the resulting resin was dried to obtain a sample. The styrene content (mol%) and divinylbenzene (DVB) content (mol%) for the coordination polymerization step were measured using ¹H-NMR on the obtained sample. Additionally, the weight-average molecular weight for the coordination polymerization step was determined by gel permeation chromatography (GPC). The measurement results for the styrene content (mol%), DVB content (mol%) and weight-average molecular weight in the coordination polymerization step are shown in Table 1.

### <Anionic polymerization step>

The supply of ethylene to the polymerization tank was stopped, the ethylene was rapidly depressurized and the internal temperature was cooled to 60 °C. After cooling the internal temperature of the autoclave to 60 °C, 250 mmol of n-butyl lithium (hexane solution) were fed into the polymerization tank from a catalyst tank together with nitrogen gas. Anionic polymerization immediately began, and the internal temperature rose from 60 °C to 75 °C at one point. The temperature was maintained at 75 °C for 1 hour and the polymerization was continued. After the polymerization was completed, 100 ml of water was injected to deactivate the n-butyl lithium. The solvent was removed from the polymerization solution by means of a degassing extruder wherein the level of pressure reduction of the degassing portion was set to 50 to 100 mmHg. The target polymer was recovered as 5.3 kg of pellets. The weight-average molecular weight (PS chain Mw) of the cross-chains was determined by GPC on the recovered pellets. The obtained analysis results are shown in Table 1.

### <Synthesis Example 4>

### Synthesis of Cross-copolymer (IV)

### <Coordination Polymerization Step>

Polymerization was performed using an autoclave with a capacity of 50 L, equipped with a stirrer and a heating/cooling jacket.

23.3 kg of cyclohexane, 2.0 kg of styrene and divinylbenzene manufactured by Nippon Steel Chemical (meta- and para- mixture, 73 mmol as divinylbenzene) were loaded and stirred at 220 rpm with an internal temperature of 60 °C. Next, 50 mmol of triisobutyl aluminum and 65 mmol of methyl aluminoxane (produced by Toso FineChem, MMAO-3A/toluene solution) on Al-basis were added, and the gas in the system was immediately substituted with ethylene. After substitution, the internal temperature was raised to 90 °C and ethylene was fed to make the pressure 0.39 MPaG. Thereafter, 50 ml of a toluene solution into which were dissolved 110 µmol of rac-dimethylmethylene bis(4,5-benzo-1-indenyl)zirconium dichloride and 1 mmol of triisobutyl aluminum was added to the autoclave. Polymerization immediately began, and the internal temperature rose to 95 °C. The polymerization was carried out with the internal temperature at 95 °C and by supplementing ethylene to maintain a pressure of 0.39 MPaG. When the consumed amount of ethylene reached 2.8 kg, a small amount (50 mL) of polymerization solution was sampled and mixed into methanol to precipitate the resin, after which the precipitated resin was filtered out and the resulting resin was dried to obtain a sample. The styrene content (mol%) and divinylbenzene (DVB) content (mol%) for the coordination polymerization step were measured using ¹H-NMR on the obtained sample. Additionally, the weight-average molecular weight for the coordination polymerization step was determined by gel permeation chromatography (GPC). The measurement results for the styrene content (mol%), DVB content (mol%) and weight-average molecular weight in the coordination polymerization step are shown in Table 1.

### <Anionic polymerization step>

The supply of ethylene to the polymerization tank was stopped, the ethylene was rapidly depressurized and the internal temperature was cooled to 60 °C. After cooling the internal temperature of the autoclave to 60 °C, 220 mmol of n-butyl lithium (hexane solution) were fed into the polymerization tank from a catalyst tank together with nitrogen gas. Anionic polymerization immediately began, and the internal temperature rose from 60 °C to 75 °C at one point. The temperature was maintained at 75 °C for 1 hour and the polymerization was continued. After the polymerization was completed, 100 ml of water was injected to deactivate the n-butyl lithium. The solvent was removed from the polymerization solution by means of a degassing extruder wherein the level of pressure reduction of the degassing portion was set to 50 to 100 mmHg. The target polymer was recovered as 5.4 kg of pellets. The weight-average molecular weight (PS chain Mw) of the cross-chains was determined by GPC on the recovered pellets. The obtained analysis results are shown in Table 1.

### <Synthesis Example 5>

### Synthesis of Cross-copolymer (V)

### <Coordination Polymerization Step>

Polymerization was performed using an autoclave with a capacity of 50 L, equipped with a stirrer and a heating/cooling jacket.

17.4 kg of cyclohexane, 6.2 kg of styrene and divinylbenzene manufactured by Nippon Steel Chemical (meta- and para- mixture, 102 mmol as divinylbenzene) were loaded and stirred at 220 rpm with an internal temperature of 60 °C. Next, 50 mmol of triisobutyl aluminum and 75 mmol of methyl aluminoxane (produced by Toso FineChem, MMAO-3A/toluene solution) on Al-basis were added, and the gas in the system was immediately substituted with ethylene. After substitution, the internal temperature was raised to 90 °C and ethylene was fed to make the pressure 0.45 MPaG. Thereafter, 50 ml of a toluene solution into which were dissolved 100 µmol of rac-dimethylmethylene bis(4,5-benzo-1-indenyl)zirconium dichloride and 1 mmol of triisobutyl aluminum was added to the autoclave. Polymerization immediately began, and the internal temperature rose to 95 °C. The polymerization was carried out with the internal temperature at 95 °C and by supplementing ethylene to maintain a pressure of 0.45 MPaG. When the consumed amount of ethylene reached 3.3 kg, a small amount (50 mL) of polymerization solution was sampled and mixed into methanol to precipitate the resin, after which the precipitated resin was filtered out and the resulting resin was dried to obtain a sample. The styrene content (mol%) and divinylbenzene (DVB) content (mol%) for the coordination polymerization step were measured using ¹H-NMR on the obtained sample. Additionally, the weight-average molecular weight for the coordination polymerization step was determined by gel permeation chromatography (GPC). The measurement results for the styrene content (mol%), DVB content (mol%) and weight-average molecular weight in the coordination polymerization step are shown in Table 1.

### <Anionic polymerization step>

The supply of ethylene to the polymerization tank was stopped, the ethylene was rapidly depressurized and the internal temperature was cooled to 60 °C. After cooling the internal temperature of the autoclave to 60 °C, 250 mmol of n-butyl lithium (hexane solution) were fed into the polymerization tank from a catalyst tank together with nitrogen gas. Anionic polymerization immediately began, and the internal temperature rose from 60 °C to 75 °C at one point. The temperature was maintained at 75 °C for 1 hour and the polymerization was continued. After the polymerization was completed, 100 ml of water was injected to deactivate the n-butyl lithium. The solvent was removed from the polymerization solution by means of a degassing extruder wherein the level of pressure reduction of the degassing portion was set to 50 to 100 mmHg. The target polymer was recovered as 5.3 kg of pellets. The weight-average molecular weight (PS chain Mw) of the cross-chains was determined by GPC on the recovered pellets. The obtained analysis results are shown in Table 1.

### <Synthesis Example 6>

### Synthesis of Cross-copolymer (VI)

### <Coordination Polymerization Step>

Polymerization was performed using an autoclave with a capacity of 50 L, equipped with a stirrer and a heating/cooling jacket.

23.1 kg of cyclohexane, 2.9 kg of styrene and divinylbenzene manufactured by Nippon Steel Chemical (meta- and para- mixture, 15 mmol as divinylbenzene) were loaded and stirred at 220 rpm with an internal temperature of 60 °C. Next, 50 mmol of triisobutyl aluminum and 113 mmol of methyl aluminoxane (produced by Toso FineChem, MMAO-3A/toluene solution) on Al-basis were added, and the gas in the system was immediately substituted with ethylene. After substitution, the internal temperature was raised to 90 °C and ethylene was fed to make the pressure 0.39 MPaG. Thereafter, 50 ml of a toluene solution into which were dissolved 110 µmol of rac-dimethylmethylene bis(4,5-benzo-1-indenyl)zirconium dichloride and 1 mmol of triisobutyl aluminum was added to the autoclave. Polymerization immediately began, and the internal temperature rose to 95 °C. The polymerization was carried out with the internal temperature at 95 °C and by supplementing ethylene to maintain a pressure of 0.39 MPaG. When the consumed amount of ethylene reached 4.3 kg, a small amount (50 mL) of polymerization solution was sampled and mixed into methanol to precipitate the resin, after which the precipitated resin was filtered out and the resulting resin was dried to obtain a sample. The styrene content (mol%) and divinylbenzene (DVB) content (mol%) for the coordination polymerization step were measured using ¹H-NMR on the obtained sample. Additionally, the weight-average molecular weight for the coordination polymerization step was determined by gel permeation chromatography (GPC). The measurement results for the styrene content (mol%), DVB content (mol%) and weight-average molecular weight in the coordination polymerization step are shown in Table 1.

### <Anionic polymerization step>

The supply of ethylene to the polymerization tank was stopped, the ethylene was rapidly depressurized and the internal temperature was cooled to 60 °C. After cooling the internal temperature of the autoclave to 60 °C, 220 mmol of n-butyl lithium (hexane solution) were fed into the polymerization tank from a catalyst tank together with nitrogen gas. Anionic polymerization immediately began, and the internal temperature rose from 60 °C to 75 °C at one point. The temperature was maintained at 75 °C for 1 hour and the polymerization was continued. After the polymerization was completed, 100 ml of water was injected to deactivate the n-butyl lithium. The solvent was removed from the polymerization solution by means of a degassing extruder wherein the level of pressure reduction of the degassing portion was set to 50 to 100 mmHg. The target polymer was recovered as 6.3 kg of pellets. The weight-average molecular weight (PS chain Mw) of the cross-chains was determined by GPC on the recovered pellets. The obtained analysis results are shown in Table 1.

### <Synthesis Example 7>

### Synthesis of Cross-copolymer (VII)

### <Coordination Polymerization Step>

Polymerization was performed using an autoclave with a capacity of 50 L, equipped with a stirrer and a heating/cooling jacket.

23.3 kg of cyclohexane, 2.6 kg of styrene and divinylbenzene manufactured by Nippon Steel Chemical (meta- and para- mixture, 603 mmol as divinylbenzene) were loaded and stirred at 220 rpm with an internal temperature of 60 °C. Next, 50 mmol of triisobutyl aluminum and 65 mmol of methyl aluminoxane (produced by Toso FineChem, MMAO-3A/toluene solution) on Al-basis were added, and the gas in the system was immediately substituted with ethylene. After substitution, the internal temperature was raised to 90 °C and ethylene was fed to make the pressure 0.45 MPaG. Thereafter, 50 ml of a toluene solution into which were dissolved 110 µmol of rac-dimethylmethylene bis(4,5-benzo-1-indenyl)zirconium dichloride and 1 mmol of triisobutyl aluminum was added to the autoclave. Polymerization immediately began, and the internal temperature rose to 95 °C. The polymerization was carried out with the internal temperature at 95 °C and by supplementing ethylene to maintain a pressure of 0.45 MPaG. When the consumed amount of ethylene reached 2.5 kg, a small amount (50 mL) of polymerization solution was sampled and mixed into methanol to precipitate the resin, after which the precipitated resin was filtered out and the resulting resin was dried to obtain a sample. The styrene content (mol%) and divinylbenzene (DVB) content (mol%) for the coordination polymerization step were measured using ¹H-NMR on the obtained sample. Additionally, the weight-average molecular weight for the coordination polymerization step was determined by gel permeation chromatography (GPC). The measurement results for the styrene content (mol%), DVB content (mol%) and weight-average molecular weight in the coordination polymerization step are shown in Table 1.

### <Anionic polymerization step>

The supply of ethylene to the polymerization tank was stopped, the ethylene was rapidly depressurized and the internal temperature was cooled to 60 °C. After cooling the internal temperature of the autoclave to 60 °C, 3 kg of styrene were loaded, and 1700 mmol of n-butyl lithium (hexane solution) were fed into the polymerization tank from a catalyst tank together with nitrogen gas. Anionic polymerization immediately began, and the internal temperature rose from 60 °C to 75 °C at one point. The temperature was maintained at 75 °C for 1 hour and the polymerization was continued. After the polymerization was completed, 100 ml of water was injected to deactivate the n-butyl lithium. The solvent was removed from the polymerization solution by means of a degassing extruder wherein the level of pressure reduction of the degassing portion was set to 50 to 100 mmHg. The target polymer was recovered as 6.2 kg of pellets. The weight-average molecular weight (PS chain Mw) of the cross-chains was determined by GPC on the recovered pellets. The obtained analysis results are shown in Table 1.

### <Synthesis Example 8>

### Synthesis of Cross-copolymer (VIII)

### <Coordination Polymerization Step>

Polymerization was performed using an autoclave with a capacity of 50 L, equipped with a stirrer and a heating/cooling jacket.

22.6 kg of cyclohexane, 1.7 kg of styrene and divinylbenzene manufactured by Nippon Steel Chemical (meta- and para- mixture, 64.7 mmol as divinylbenzene) were loaded and stirred at 220 rpm with an internal temperature of 60 °C. Next, 50 mmol of triisobutyl aluminum and 60 mmol of methyl aluminoxane (produced by Toso FineChem, MMAO-3A/toluene solution) on Al-basis were added, and the gas in the system was immediately substituted with ethylene. After substitution, the internal temperature was raised to 80 °C and ethylene was fed to make the pressure 0.47 MPaG. Thereafter, 50 ml of a toluene solution into which were dissolved 50 µmol of rac-dimethylmethylene bis(4,5-benzo-1-indenyl)zirconium dichloride and 1 mmol of triisobutyl aluminum was added to the autoclave. Polymerization immediately began, and the internal temperature rose to 95 °C. The polymerization was carried out with the internal temperature at 95 °C and by supplementing ethylene to maintain a pressure of 0.47 MPaG. When the consumed amount of ethylene reached 2.6 kg, a small amount (50 mL) of polymerization solution was sampled and mixed into methanol to precipitate the resin, after which the precipitated resin was filtered out and the resulting resin was dried to obtain a sample. The styrene content (mol%) and divinylbenzene (DVB) content (mol%) for the coordination polymerization step were measured using ¹H-NMR on the obtained sample. Additionally, the weight-average molecular weight for the coordination polymerization step was determined by gel permeation chromatography (GPC). The measurement results for the styrene content (mol%), DVB content (mol%) and weight-average molecular weight in the coordination polymerization step are shown in Table 1.

### <Anionic polymerization step>

The supply of ethylene to the polymerization tank was stopped, the ethylene was rapidly depressurized and the internal temperature was cooled to 60 °C. After cooling the internal temperature of the autoclave to 60 °C, 170 mmol of n-butyl lithium (hexane solution) were fed into the polymerization tank from a catalyst tank together with nitrogen gas. Anionic polymerization immediately began, and the internal temperature rose from 60 °C to 75 °C at one point. The temperature was maintained at 75 °C for 1 hour and the polymerization was continued. After the polymerization was completed, 100 ml of water was injected to deactivate the n-butyl lithium. The solvent was removed from the polymerization solution by means of a degassing extruder wherein the level of pressure reduction of the degassing portion was set to 50 to 100 mmHg. The target polymer was recovered as 4.2 kg of pellets. The weight-average molecular weight (PS chain Mw) of the cross-chains was determined by GPC on the recovered pellets. The obtained analysis results are shown in Table 1.

### <Synthesis Example 9>

### Synthesis of Cross-copolymer (IX)

### <Coordination Polymerization Step>

Polymerization was performed using an autoclave with a capacity of 50 L, equipped with a stirrer and a heating/cooling jacket.

21.6 kg of cyclohexane, 2.8 kg of styrene and divinylbenzene manufactured by Nippon Steel Chemical (meta- and para- mixture, 76.6 mmol as divinylbenzene) were loaded and stirred at 220 rpm with an internal temperature of 60 °C. Next, 50 mmol of triisobutyl aluminum and 100 mmol of methyl aluminoxane (produced by Toso FineChem, MMAO-3A/toluene solution) on Al-basis were added, and the gas in the system was immediately substituted with ethylene. After substitution, the internal temperature was raised to 80 °C and ethylene was fed to make the pressure 0.23 MPaG. Thereafter, 50 ml of a toluene solution into which were dissolved 75 µmol of rac-dimethylmethylene bis(4,5-benzo-1-indenyl)zirconium dichloride and 1 mmol of triisobutyl aluminum was added to the autoclave. Polymerization immediately began, and the internal temperature rose to 85 °C. The polymerization was carried out with the internal temperature at 85 °C and by supplementing ethylene to maintain a pressure of 0.23 MPaG. When the consumed amount of ethylene reached 0.69 kg, a small amount (50 mL) of polymerization solution was sampled and mixed into methanol to precipitate the resin, after which the precipitated resin was filtered out and the resulting resin was dried to obtain a sample. The styrene content (mol%) and divinylbenzene (DVB) content (mol%) for the coordination polymerization step were measured using ¹H-NMR on the obtained sample. Additionally, the weight-average molecular weight for the coordination polymerization step was determined by gel permeation chromatography (GPC). The measurement results for the styrene content (mol%), DVB content (mol%) and weight-average molecular weight in the coordination polymerization step are shown in Table 1.

### <Anionic polymerization step>

The supply of ethylene to the polymerization tank was stopped, the ethylene was rapidly depressurized and the internal temperature was cooled to 60 °C. After cooling the internal temperature of the autoclave to 60 °C, 280 mmol of n-butyl lithium (hexane solution) were fed into the polymerization tank from a catalyst tank together with nitrogen gas. Anionic polymerization immediately began, and the internal temperature rose from 60 °C to 75 °C at one point. The temperature was maintained at 75 °C for 1 hour and the polymerization was continued. After the polymerization was completed, 100 ml of water was injected to deactivate the n-butyl lithium. The solvent was removed from the polymerization solution by means of a degassing extruder wherein the level of pressure reduction of the degassing portion was set to 50 to 100 mmHg. The target polymer was recovered as 3.3 kg of pellets. The weight-average molecular weight (PS chain Mw) of the cross-chains was determined by GPC on the recovered pellets. The obtained analysis results are shown in Table 1.

**[Table 1]**

| | | Coordination Polymerization | | | Anionic Polymerization | Proportion of Copolymer obtained in Coordination Polymerization Step [mass%] |
|---|---|---|---|---|---|---|
| | | Styrene Content [mol%] | DVB Content [mol%] | Mw 10⁴ | PS Chain Mw 10⁴ | |
| Synthesis Example 1 | Cross-copolymer (I) | 14.6 | 0.06 | 13.1 | 2.3 | 88.8 |
| Synthesis Example 2 | Cross-copolymer (II) | 19.4 | 0.04 | 15.5 | 1.6 | 87.0 |
| Synthesis Example 3 | Cross-copolymer (III) | 24.8 | 0.07 | 17.8 | 1.9 | 88.0 |
| Synthesis Example 4 | Cross-copolymer (IV) | 12.2 | 0.07 | 10.5 | 2.7 | 85.2 |
| Synthesis Example 5 | Cross-copolymer (V) | 27.6 | 0.07 | 9.9 | 2.7 | 79.0 |
| Synthesis Example 6 | Cross-copolymer (VI) | 14.7 | 0.01 | 12.3 | 0.8 | 95.2 |
| Synthesis Example 7 | Cross-copolymer (VII) | 15.1 | 0.48 | 14.7 | 0.7 | 49.4 |
| Synthesis Example 8 | Cross-copolymer (VIII) | 8.4 | 0.12 | 11 | 2.4 | 89.2 |
| Synthesis Example 9 | Cross-copolymer (IX) | 31 | 0.064 | 29.8 | 3.3 | 59.4 |

The styrene content (mol%) and divinylbenzene DVB content (mol%) in the coordination polymerization step as obtained for each synthesis example was measured by the following method.
Equipment: Avance 300 (manufactured by Bruker)
Procedure: The resin sample precipitated in methanol was dissolved in deuterio 1,1,2,2-tetrachloroethane and measured by ¹H-NMR at 130 °C. The styrene content (mol%) was determined from a comparison of the area intensity of peaks (6.5 to 7.5 ppm) due to phenyl group protons using trimethylsilane as the standard. Additionally, the divinylbenzene content (mol%) was determined from the area intensity of peaks (5.2 ppm) due to vinyl group protons.

The weight-average molecular weight of the copolymer obtained in the coordination polymerization step and the weight-average molecular weight (PS chain Mw) of the cross-chain of the cross-copolymer obtained in the anionic polymerization step are polystyrene-converted values measured by gel permeation chromatography (GPC), the measurements being made under the below-indicated measurement conditions.

| | |
|---|---|
| Equipment: | HLC-8220 (manufactured by Toso) |
| Column: | Shodex GPC KF-404HQ, four in a linear arrangement |
| Temperature: | 40 °C |
| Detection: | differential refractive index |
| Solvent: | tetrahydrofuran |
| Calibration curve: | produced using standard polystyrene (PS) |

The proportion (mass%) of copolymers obtained in the coordination polymerization step in the cross-copolymer was calculated by the following method.

The unreacted styrene monomers and divinylbenzene monomers were measured for the polymerization solution samples obtained in the coordination polymerization step using the following device.
Equipment: 6890 series GC device (manufactured by Agilent)
Column: Capillary column DB-1 (manufactured by Agilent, polysiloxane)

Additionally, after mixing 6 g of the polymerization solution sample obtained in the coordination polymerization step into 500 mL of methanol to precipitate out the resin, the precipitated resin was filtered and the resulting resin was dried. The resin content: (mass of dried resin)/(mass of polymerization sample) was determined from the mass of the dried resin.

The proportion (mass%) of the copolymer obtained in the coordination polymerization step was determined from the analysis values obtained by measurement.

### <Examples 1-22, Comparative Examples 1-7>

The cross-copolymers obtained in Synthesis Examples 1-9, a hydrogenated block copolymer and polypropylene were melt-kneaded in the blends shown in Table 2 and Table 3, to obtain a thermoplastic elastomer resin composition. As an antioxidant, 0.1 parts by mass of Irganox 1076 (manufactured by BASF) was added for 100 parts by mass of the resin composition.

Extrusion was performed using a φ35 mm twin-screw extruder manufactured by Toshiba Machine, with the screw rotation speed at 200 rpm and the processing temperature at 200 °C. The resulting pellets were press-molded at 200 °C and 10 MPa to produce various types of evaluation sheets.

Additionally, a composite molded article having the thermoplastic elastomer resin composition according to the present invention double-molded as a surface layer material on the surface of a core material consisting of a polyolefin resin was produced as follows.

An injection molding machine (manufactured by Sumitomo Heavy Industries, Sumitomo Netstal Sycap 165/75) was used to produce a plate-shaped molded piece of length 120 mm × width 100 mm × thickness 3 mm at a cylinder temperature of 220 °C and a die temperature of 40 °C as a core material. Prime Polypro J707 (manufactured by Prime Polymer; block polypropylene, MFR 30.0 g/10 min (230 °C, 2.16 kg)) was used for the core material. A composite molded article was produced by double-molding, by injection molding a surface layer material of thickness 1 mm in the gap between the core material and the die. In this composite molded article, the surface layer material was molded onto one surface of the core material.

The results of the examples are shown in Table 2 and Table 3.

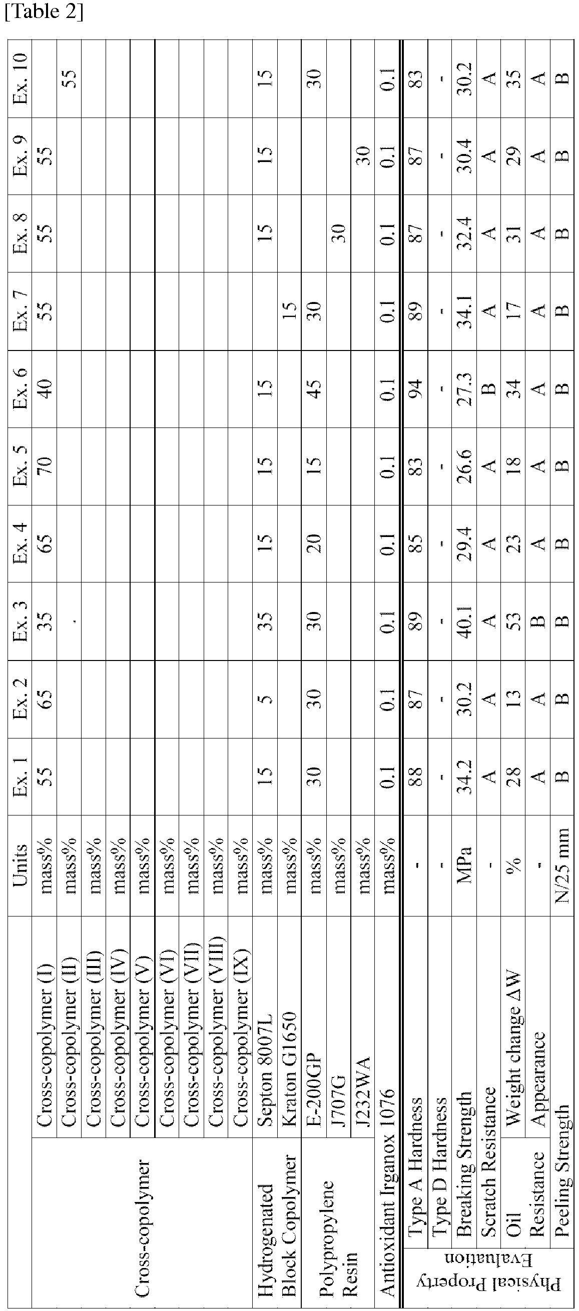

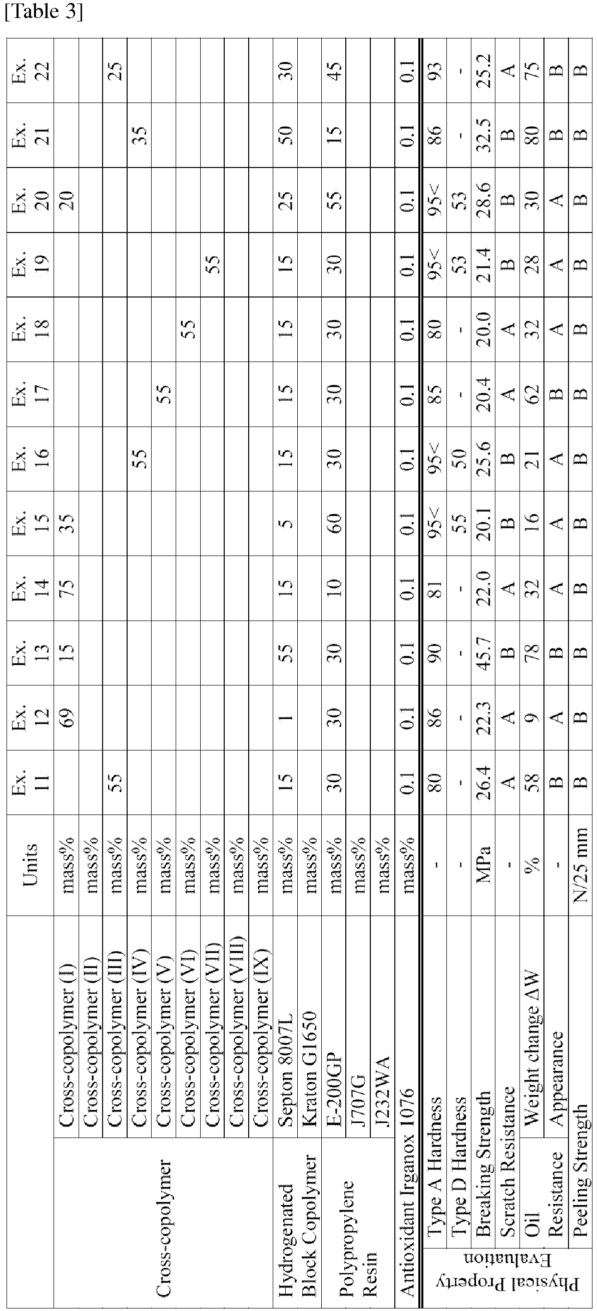

The results of the comparative examples are shown in Table 4.

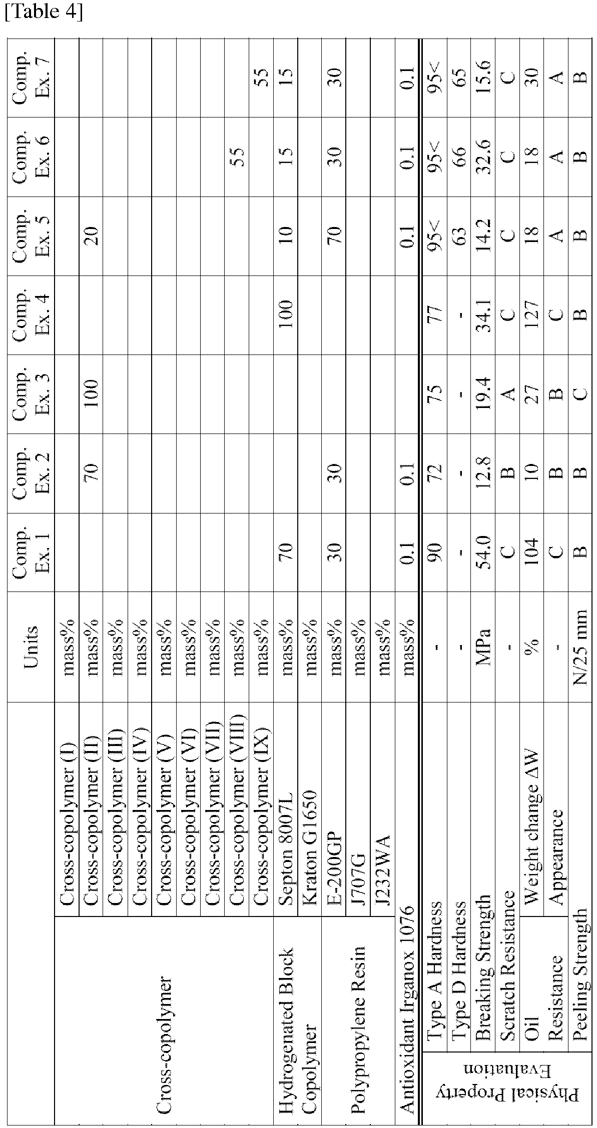

The evaluations were performed by the following methods.

### <Hardness>

The instantaneous value of hardness was determined using the type A and type D durometer hardness in accordance with JIS K6253.

A type A hardness of 95 or less and a type D hardness of 60 or less were deemed to be satisfactory.

### <Tensile test>

The tensile breaking strength was measured in accordance with JIS K6251. As a testing piece, a 1 mm thick press sheet punched into the shape of a no. 3 dumbbell was used. The tensile rate was 500 mm/min.

A tensile breaking strength of 20 MPa or more was deemed to be satisfactory.

### <Scratch resistance test>

A test was performed using a Taber type scratch tester (HA-201) manufactured by Tester Sangyo, with a square press sheet 100 mm on a side and with a thickness of 1 mm as the test piece. As the testing method, a scratch was made with a scratch speed of 3.3 mm/sec and a load of 300 gf using a tungsten carbide cutter, and the state of "peeling damage" in which a portion of the surface finely peels was evaluated into three grades.
A: No peeling damage observed
B: Some peeling damage observed
C: Clear peeling damage observed

Grades of A and B were deemed to be satisfactory.

### <Oil resistance test>

As the testing piece, a 2 mm thick press sheet cut to a square testing piece 20 mm on a side was used in accordance with JIS K6258. As the oil, IRM903 (high swell oil) was used for 7 days of immersion at a temperature of 23 °C, and the change in weight and appearance were evaluated. The standard for evaluating the appearance was in three grades.
A: Almost no change in appearance
B: Slight swelling
C: Swelling and deformation

A weight change of 80% or less and an appearance grade of A or B were deemed to be satisfactory.

### <Peeling test>

A strip-shaped testing piece of width 25 mm and length 100 mm cut out from the composite molded article was used to perform a tensile test by pulling the surface layer material and the core material at a pulling speed of 50 mm/min in 180 degree directions, to measure the peeling strength (N/25 mm).

The standard for the peeling strength evaluation was in two grades.
B: Peeling strength at least 50 N/25 mm
C: Peeling strength less than 50 N/25 mm

The examples relating to the thermoplastic elastomer resin composition of the present invention all had a tensile breaking strength of at least 20 MPa and excelled in softness, oil resistance and scratch resistance. In particular, the thermoplastic elastomer resin compositions (Examples 1-11) comprising 20 to 80 mass% of a cross-copolymer having 13.97 to 25.97 mol% of aromatic vinyl monomer units, 74 to 86 mol% of olefin monomer units and 0.03 to 0.3 mol% of aromatic polyene monomer units in the aromatic vinyl-olefin-aromatic polyene copolymer constituting the cross-copolymer; 5 to 35 mass% of a hydrogenated block copolymer; and 15 to 45 mass% of a polypropylene resin all had a tensile breaking strength of at least 25 MPa, excelled in softness, oil resistance and scratch resistance, and were thermoplastic elastomer resin compositions that particularly excelled in tensile breaking strength, softness, oil resistance and scratch resistance. The comparative examples not satisfying the conditions of the present invention were inferior in one of the physical properties among tensile breaking strength, softness, oil resistance and scratch resistance.

### INDUSTRIAL APPLICABILITY

The thermoplastic elastomer resin composition of the present invention excels in tensile breaking strength, softness, oil resistance and scratch resistance, and can be double-molded as a surface layer material for a core material consisting of an olefinic resin and used as a composite molded article. Therefore, the composition can be used as an automotive interior element, a household electrical appliance element, a toy, or miscellaneous goods, and is favorable for use in skin materials requiring an outer appearance for a product due to having particularly excellent scratch resistance.

## Claims

1. A thermoplastic elastomer resin composition consisting of: 15 to 89 mass% of a cross-copolymer having a polymer consisting of aromatic vinyl monomer units as a cross-chain structure on an aromatic vinyl-olefin-aromatic polyene copolymer main chain consisting of 9.99 to 29.99 mol% of aromatic vinyl monomer units, 70 to 90 mol% of olefin monomer units and 0.01 to 0.5 mol% of aromatic polyene monomer units; 1 to 55 mass% of a hydrogenated block copolymer; and 10 to 60 mass% of a polypropylene resin.

2. The thermoplastic elastomer resin composition according to claim 1, wherein the aromatic vinyl-olefin-aromatic polyene copolymer consists of 13.97 to 25.97 mol% of aromatic vinyl monomer units, 74 to 86 mol% of olefin monomer units and 0.03 to 0.3 mol% of aromatic polyene monomer units.

3. The thermoplastic elastomer resin composition according to claim 1 or 2, wherein the cross-copolymer has 5 to 50 mass% of the polymer consisting of aromatic vinyl monomer units as the cross-chain structure on 50 to 95 mass% of the aromatic vinyl-olefin-aromatic polyene copolymer main chain.

4. The thermoplastic elastomer resin composition according to any one of claims 1 to 3, wherein the olefin monomer units in the cross-copolymer are ethylene units.

5. The thermoplastic elastomer resin composition according to any one of claims 1 to 4, wherein the aromatic vinyl monomer units in the cross-copolymer are styrene units.

6. The thermoplastic elastomer resin composition according to any one of claims 1 to 5, consisting of: 20 to 80 mass% of the cross-copolymer; 5 to 35 mass% of the hydrogenated block copolymer; and 15 to 45 mass% of the polypropylene resin.

7. A composite molded article comprising a core material consisting of a polyolefinic resin; and a surface layer material consisting of the thermoplastic elastomer resin composition according to any one of claims 1 to 6, wherein the surface layer material is double-molded onto the surface of the core material.

## Patentansprüche

1. Thermoplastische Elastomerharzzusammensetzung, bestehend aus: 15 bis 89 Masse-% eines Kreuz-Copolymers mit einem Polymer, bestehend aus aromatischen Vinylmonomereinheiten als Querkettenstruktur, an einer (aromatisches Vinyl)-Olefin-(aromatisches Polyen)-Copolymer-Hauptkette, bestehend aus 9,99 bis 29,99 Mol-% aromatischen Vinylmonomereinheiten, 70 bis 90 Mol-% Olefinmonomereinheiten und 0,01 bis 0,5 Mol-% aromatischen Polyenmonomereinheiten; 1 bis 55 Masse-% eines hydrierten Blockcopolymers; und 10 bis 60 Masse-% eines Polypropylenharzes.

2. Thermoplastische Elastomerharzzusammensetzung nach Anspruch 1, wobei das (aromatisches Vinyl)-Olefin-(aromatisches Polyen)-Copolymer aus 13,97 bis 25,97 Mol-% aromatischen Vinylmonomereinheiten, 74 bis 86 Mol-% Olefinmonomereinheiten und 0,03 bis 0,3 Mol-% aromatischen Polyenmonomereinheiten besteht.

3. Thermoplastische Elastomerharzzusammensetzung nach Anspruch 1 oder 2, wobei das Kreuz-Copolymer 5 bis 50 Masse-% des Polymers, bestehend aus aromatischen Vinylmonomereinheiten als Querkettenstruktur, an 50 bis 95 Masse-% der (aromatisches Vinyl)-Olefin-(aromatisches Polyen)-Copolymer-Hauptkette aufweist.

4. Thermoplastische Elastomerharzzusammensetzung nach einem der Ansprüche 1 bis 3, wobei die Olefinmonomereinheiten in dem Kreuz-Copolymer Ethyleneinheiten sind.

5. Thermoplastische Elastomerharzzusammensetzung nach einem der Ansprüche 1 bis 4, wobei die aromatischen Vinylmonomereinheiten in dem Kreuz-Copolymer Styroleinheiten sind.

6. Thermoplastische Elastomerharzzusammensetzung nach einem der Ansprüche 1 bis 5, bestehend aus: 20 bis 80 Masse-% des Kreuz-Copolymers; 5 bis 35 Masse-% des hydrierten Blockcopolymers; und 15 bis 45 Masse-% des Polypropylenharzes.

7. Verbundformgegenstand, umfassend ein Kernmaterial, bestehend aus einem Polyolefinharz; und ein Oberflächenschichtmaterial, bestehend aus der thermoplastischen Elastomerharzzusammensetzung nach einem der Ansprüche 1 bis 6, wobei das Oberflächenschichtmaterial doppelt auf die Oberfläche des Kernmaterials geformt ist.

## Revendications

1. Composition de résine élastomère thermoplastique, se composant de : 15 à 89 % massique d'un copolymère réticulé ayant un polymère se composant d'unités monomères vinyliques aromatiques en tant que structure à chaîne croisée sur une chaîne principale de copolymère vinylique aromatique-oléfine-polyène aromatique se composant de 9,99 à 29,99 mol% d'unités monomères vinyliques aromatiques, de 70 à 90 mol% d'unités monomères oléfiniques et de 0,01 à 0,5 mol% d'unités monomères de polyène aromatique ; de 1 à 55 % massique d'un copolymère bloc hydrogéné ; et de 10 à 60 % massique d'une résine de polypropylène.

2. Composition de résine élastomère thermoplastique selon la revendication 1, le copolymère vinylique aromatique-oléfine-polyène aromatique se composant de 13,97 à 25,97 mol% d'unités monomères vinyliques aromatiques, de 74 à 86 mol% d'unités monomères oléfiniques et de 0,03 à 0,3 mol% d'unités monomères de polyène aromatique.

3. Composition de résine élastomère thermoplastique selon la revendication 1 ou 2, le copolymère réticulé ayant de 5 à 50 % massique du polymère se composant d'unités monomères vinyliques aromatiques comme une structure à chaîne croisée sur 50 à 95 % massique de la chaîne principale de copolymère vinylique aromatique-oléfine-polyène aromatique.

4. Composition de résine élastomère thermoplastique selon l'une quelconque des revendications 1 à 3, les unités monomères oléfiniques dans le copolymère réticulé étant des unités éthyléniques.

5. Composition de résine élastomère thermoplastique selon l'une quelconque des revendications 1 à 4, les unités monomères vinyliques aromatiques dans le copolymère réticulé étant des unités styréniques.

6. Composition de résine élastomère thermoplastique selon l'une quelconque des revendications 1 à 5, se composant de : 20 à 80 % massique du copolymère réticulé ; 5 à 35 % massique du copolymère bloc hydrogéné ; et de 15 à 45 % massique de la résine de polypropylène.

7. Article moulé composite comprenant un matériau d'âme se composant d'une résine polyoléfinique ; et d'un matériau de couche de surface se composant de la composition de résine élastomère thermoplastique selon l'une quelconque des revendications 1 à 6, le matériau de couche de surface étant doublement moulé sur la surface du matériau d'âme.
